# EUROPEAN PATENT SPECIFICATION

(11) **EP 1 669 977 B1**
(45) Date of publication and mention of the grant of the patent: **13.08.2014**
(21) Application number: 05257057.9
(22) Date of filing: 16.11.2005
(51) Int. Cl.: G10H 1/22, G10H 1/46, G10H 1/36, G10H 1/00

(54) **Method of controlling the reproduction of sound and apparatus therefor**
Verfahren zur Tonwiedergabesteuerung und Vorrichtung dafür
Procédé de commande de la reproduction de sons et appareil correspondant

(30) Priority: 08.12.2004 KR 2004103085
(43) Date of publication of application: 14.06.2006
(73) Proprietor: Samsung Electronics Co., Ltd., Suwon-si, Gyeonggi-do, 443-742 (KR)
(72) Inventor: Shin, Jung-eun, Gyeonggi-do (KR); Lee, Eun-ha, Gyeonggi-do (KR)
(74) Representative: Brandon, Paul Laurence

(56) References cited:
- US-A- 5 801 694
- US-A- 5 915 288
- US-A1- 2002 163 533
- US-B1- 6 353 170
- BRAZIL E ET AL: "Audio information browsing with the sonic browser" COORDINATED AND MULTIPLE VIEWS IN EXPLORATORY VISUALIZATION, 2003. PROCEEDINGS. INTERNATIONAL CONFERENCE ON 15 JULY 2003, PISCATAWAY, NJ, USA,IEEE, 2003, pages 28-34, XP010647139 ISBN: 0-7695-2001-4

## Description

The present invention relates to methods and apparatus for controlling the reproduction of sounds in digital audiovisual (AV) devices.

Recently, digital AV devices, including DVD players, home theatre systems, and multifunction digital TVs, have become widely used. In particular, the home theatre system, which creates a theatre-like atmosphere in the home, has been winning popularity. The home theatre includes a video device, such as a projector, a projection TV, a PDP, or a digital TV, an AV decoder supporting a digital theatre system with basic 5.1 or more channels or Dolby digital, and a speaker system with 5.1 or more channels. The video device can produce an image as clear as that in a theatre, and the AV decoder and speaker system can recreate magnificent theatre-quality sound.

However, the conventional digital AV device cannot provide a function for extracting, managing and displaying a specific sound included in sound being reproduced. In addition, it cannot provide a function for selectively reproducing a specific sound from the sound being reproduced.

US 2002/0163533 teaches displaying images representing certain sounds found by sound analysis to be included in reproduced audio, but does not teach using these images for selectively reproducing the corresponding sounds.

US 5,915,288 teaches selectively reproducing sound tracks by selecting or deselecting icons representing the sound tracks, but does not teach identifying or mapping the icons to the reproduced audio by analyzing the frequency characteristics of the reproduced audio.

The present invention is as claimed in the appended claims.

Preferred embodiments of the present invention aim to provide a method of controlling the reproduction of sounds in a digital AV device, and an apparatus thereof.

According to an aspect of the present invention, there is provided a method for controlling the reproduction of sounds in a digital audio visual (AV) device, the method comprising: extracting one or more sounds from sound being reproduced through the digital AV device by analyzing frequency characteristics of the sound being produced; mapping an image to each of the one or more extracted sounds; and selectively reproducing one or more extracted sounds by using the one or more mapped images.

According to another aspect of the present invention, there is provided a computer readable recording medium having embodied thereon a computer program for executing the method of managing a sound source.

According to another aspect of the present invention, there is provided an apparatus for controlling the reproduction of sounds in a digital AV device, the apparatus comprising: an extraction unit which extracts one or more sounds from sound being reproduced through the digital AV device by analyzing frequency characteristics of the sound being reproduced; a mapping unit which maps an image to each of the one or more extracted sound sources; and a managing unit which selectively reproduces the one or more extracted sounds sources by using the one or more mapped images.

Further features of the present invention are set out in the appended claims.

The present invention will become more apparent by describing in detail exemplary embodiments thereof with reference to the attached drawings in which:
FIG. 1 illustrates an exemplary embodiment of the structure of an apparatus for controlling the reproduction of a sound source by using an image according to the present invention;
FIG. 2 is a flowchart of a method for displaying an image corresponding to an extracted sound according to an exemplary embodiment of the present invention;
FIG. 3 is a flowchart of a method for selectively reproducing or removing a sound source according to an exemplary embodiment of the present invention;
FIGS. 4A and 4B are flowcharts of methods for registering a sound according to preferred embodiments of the present invention;
FIG. 5 is a flowchart of a method for deleting an extracted sound according to a preferred embodiment of the present invention;
FIG. 6 is a flowchart of a method for changing extracted sound information according to an exemplary embodiment of the present invention;
FIG. 7 illustrates an example of a screen on which sound information being reproduced is displayed as an image according to the present invention;
FIG. 8 illustrates an example of a screen on which a sound being reproduced is displayed as an image according to the present invention;
FIG. 9 illustrates an example of a screen on which the type of a sound being reproduced is displayed as an image according to the present invention; and
FIG. 10 illustrates an example of a screen on which the output status of an extracted sound being reproduced is displayed according to the present invention.

The present invention will now be described more fully with reference to the accompanying drawings, in which exemplary embodiments of the invention are shown.

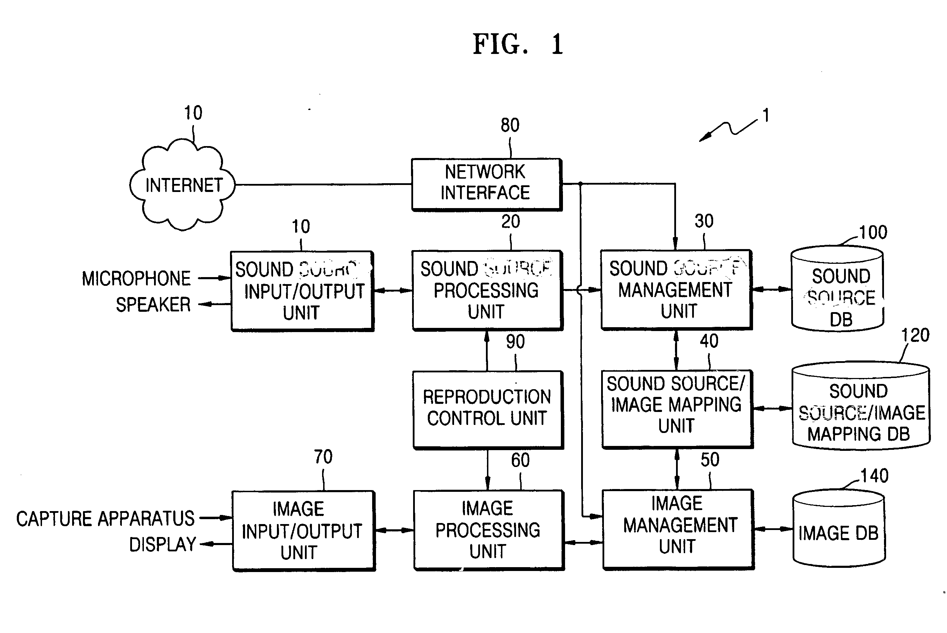

Referring to FIG. 1, an apparatus 1 for controlling the reproduction of a sound by using an image includes a sound input/output unit 10, a sound processing unit 20, a sound management unit 30, an image input/output unit 70, an image processing unit 60, an image management unit 50, a reproduction control unit 90, a sound/image mapping unit 40, and databases 100, 120 and 140. Additionally, the apparatus 1 may further include a network interface 80.

The sound input/output unit 10 receives an input of a sound signal through a microphone or another input source, and transfers the sound to the sound processing unit 20, or outputs a sound signal processed by the sound processing unit to a speaker or another output device. The sound signal input through the sound input/output unit 10 is processed as digital data by the sound processing unit 20 and can be used as a sampling sound. At this time, the sound processing unit 20 analyzes the frequency characteristics of the input sound signal and extracts at least one registered sound included in the sound. The information on the frequency characteristics of a sound generated in the process for analyzing the sound, that is, in the sampling process, is stored in the sound database 100 by the sound management unit 30, and is used to extract a registered sound from other input sound. The sound management unit 30 stores the sound data processed as digital data and sampled by the sound processing unit 20, in the sound database 100, or reads sound data stored in the sound database 100 and senses whether or not there is a corresponding sound in input sound.

Meanwhile, the image input/output unit 70 receives an image captured through a digital camera or a digital camcorder and transfers the image to the image processing unit 60, or outputs image data decoded by the image processing unit 60 through a display unit. The image input through the image input/output unit 70 can be used as a means for displaying and/or managing a sound after being encoded by the image processing unit 60. The image management unit 50 manages images so that the image data encoded by the image processing unit 60 can be stored in the image database 140, or the stored image data from the image database 140 can be read, decoded and reproduced. The reproduction control unit 90 controls the reproduction of sound data through the sound processing unit 20 and the reproduction of image data through the image processing unit 60.

Meanwhile, the sound/image mapping unit 40 maps image data which is registered, changed, or deleted in the image management unit 50, to sound data which is registered, changed, or deleted in the sound management unit 30, and stores the mapping information in the sound/image mapping database 120. By using the mapping information, the stored sound can be easily managed using the image data.

A method of managing a sound by using an image including registration, change, deletion, selective reproduction or selective deletion, based on the structure of the apparatus 1 for managing a sound described above will now be explained.

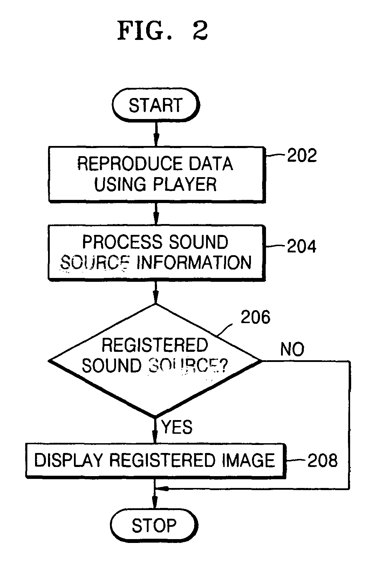

FIG. 2 is a flowchart of a method for displaying a sound according to an exemplary embodiment of the present invention.

Referring to FIG. 2, if AV data is reproduced using a digital AV device having the apparatus 1 for managing a sound with an image according to the present invention in operation 202, by using the frequency range or frequency characteristics of the sound data being reproduced, the sound data is sampled and sounds corresponding to respective sound ranges are extracted in operation 204. If the extracted sounds are sounds registered in the sound database 100 described above in operation 206, then by referring to the mapping information of the image mapping database 120, images corresponding to the sounds are read in the image database 140, and displayed on a display unit in operation 208.

For example, if the sound being reproduced through the digital AV device is orchestral music, then by using the frequency characteristics of each musical instrument, such as violin, viola, cello, and double bass, the sound for the musical instrument can be extracted from the sound being reproduced. By using the sound database 100, it is confirmed whether or not the extracted sound for each musical instrument is a registered sound. Then, if it is a registered sound, an image corresponding to the sound is displayed on the display unit by referring to the mapping information of the sound/image database 120. Accordingly, the image of the musical instruments currently being reproduced can be displayed on the screen. That is, if registered sounds such as those of a violin and a piano are reproduced, images corresponding to the sounds can be displayed.

Furthermore, if the sound being reproduced is not a registered one but a new one, this can be registered together with an image corresponding to the sound. For example, a user can register the voice of their baby as a sound , register the photo of the baby as a new image, and store mapping information mapping the voice and photo of the baby in the sound/image database 120. Accordingly, while moving pictures of the family are reproduced, if the voice of the baby is output, the newly registered photo of the baby can be displayed on the display unit.

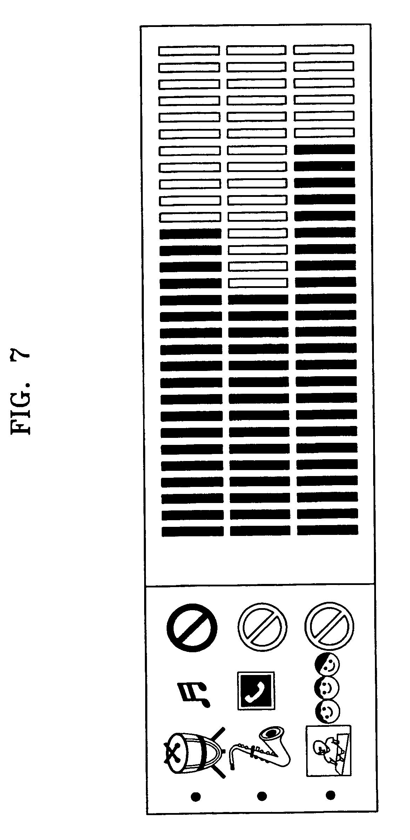

More specifically, FIG. 7 illustrates an example of a screen on which sound information being reproduced is displayed as an image according to the present invention. Referring to FIG. 7, it can be seen that the sound of a saxophone and a voice are currently being reproduced, and the sound of a drum is not reproduced. That is, sounds included in the music currently being reproduced are displayed as images, and the types and the reproduction states of the sounds can be displayed on the display unit. As a result, the user can watch the visual sound output information while listening to the music. In addition, the volume of each sound being reproduced can also be displayed on the screen.

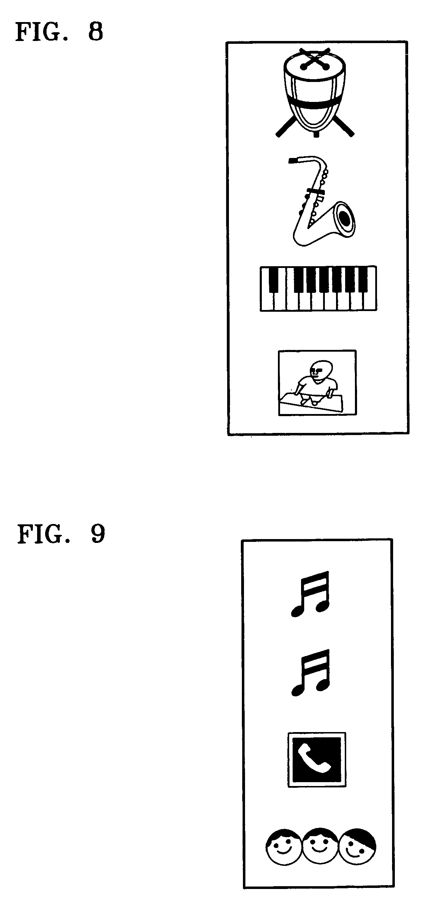

Also, FIG. 8 illustrates an example of a screen on which a sound being reproduced is displayed as an image according to the present invention. Referring to FIG. 8, the images displayed on the display screen show that a drum, a saxophone, and a piano are being played, and a singer is singing. Thus, by extracting each sound from the sound being reproduced and expressing it as an image, the sound can be easily managed by selecting, changing, or deleting the displayed image.

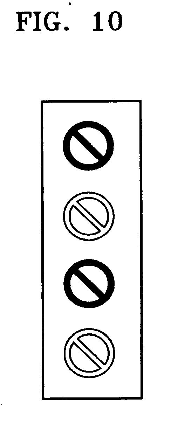

FIG. 9 illustrates an example of a screen on which the type of a sound being reproduced is displayed as an image according to the present invention. Referring to FIG. 9, it is indicated whether the type of a sound included in the sound currently being reproduced is music, background sounds, or voice. FIG. 10 illustrates an example of a screen on which the output status of a sound being reproduced is displayed according to the present invention. Referring to FIG. 10, it is indicated whether or not each of the sounds included in the sound being reproduced is currently output.

According to preferred embodiments of the present invention, the user can handle the sound in a variety of ways. For example, the user can easily selectively reproduce some sounds, or selectively remove some sounds and output the others, by handling the images displayed on the display. In this case, by displaying the output status of each sound as shown in FIG. 10, the convenience of the user can be enhanced.

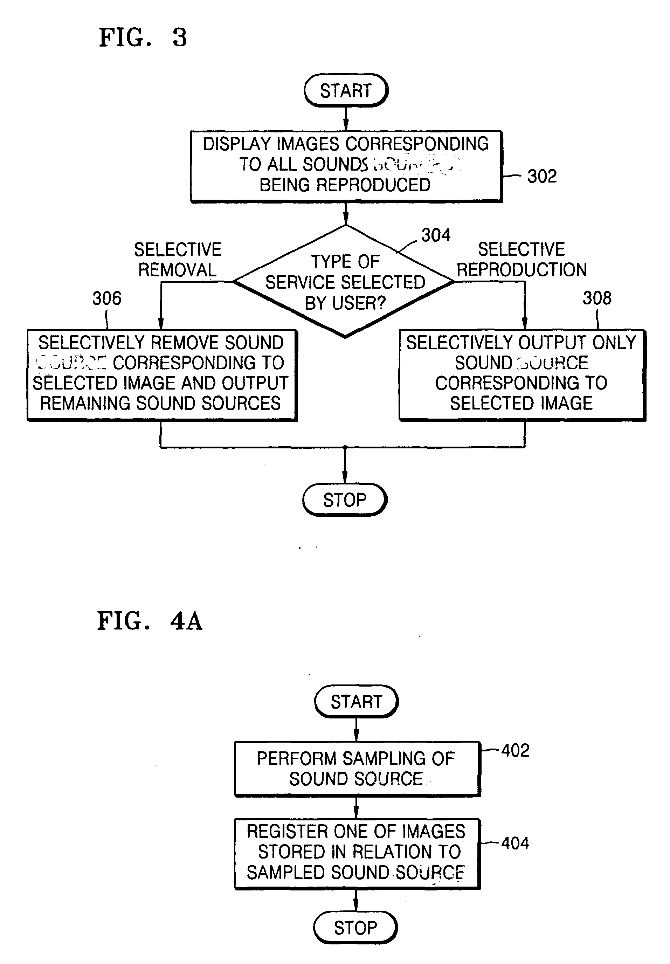

Meanwhile, FIG. 3 is a flowchart of a method for selectively reproducing or removing a sound according to a preferred embodiment of the present invention.

Referring to FIG. 3, if sounds being reproduced are all displayed as images on the display screen in operation 302, selection information for a service is input by the user in operation 304. If the selection information indicating selective reproduction is input by the user, only the sound corresponding to the image selected by the user is output in operation 308. Meanwhile, if the selection information indicating selective removal is input by the user, only the sound corresponding to the image selected by the user is removed, and the remaining sounds are output in operation 306.

For example, after moving pictures of a family are taken by a camcorder or the like, one sound, such as the voice of a baby, can be selectively removed. Also, specified noise or background sound can be removed from the output. That is, among the sounds included in the input sound, only the selected sounds are removed, and the others are output. As another application example, in the case of a digital AV device having a karaoke function, the image corresponding to a sound desired to be removed can be selected and removed, so that the reproduction of the sound can be stopped. The user can stop a specified sound such as that of a tambourine, a piano or a chorus.

Also, if string quartet music is listened to through a digital AV device according to an embodiment of the present invention, after listening to a violin, a viola, and a cello in the first movement, the user can stop the output of the sound of the viola and cello in the second movement, in order to only listen to the violin. Then, if the user removes the violin and selects the viola and the cello while listening to the violin in the third movement, he or she can listen to only the viola and the cello from that time. Thus, according to preferred embodiments of the present invention, the user can select and reproduce one sound, or can delete one sound and reproduce the remaining sounds. This is because each of the sounds is managed by using images, and it is possible for the user to easily selectively reproduce or remove each sound.

Meanwhile, a sound selected by the user can be selectively reproduced. For example, when listening to a musical performance, by selecting a violin from among the displayed images of the sounds, the user can listen to only the violin for part of the song, and then by selecting the image of the cello, can listen to only the cello. Thus, by distinguishing and managing each sound with an image, when the sound is output, each sound can be distinguished and selectively output.

As another application example, when studying a language, or memorizing a script, by turning on the sound of one actor and turning off the sound of another actor, the user can practice the dialog of the second actor.

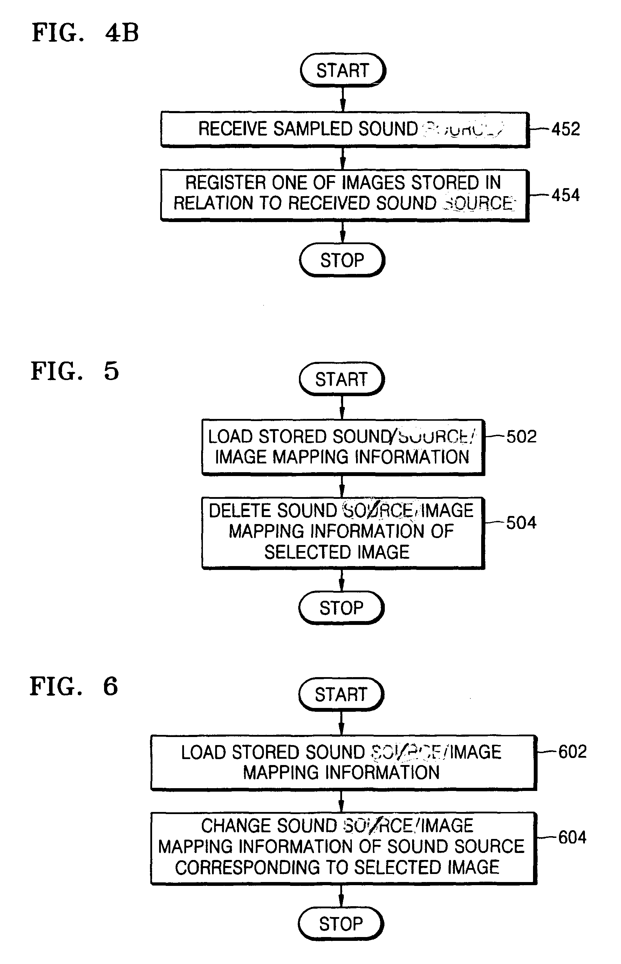

FIGS. 4A and 4B are flowcharts of methods for registering a sound according to exemplary embodiments of the present invention.

FIG. 4A shows a method by which a sound source input through the sound input/output unit 10 is sampled in operation 402, and one of the stored images is registered in relation to the sampled sound in operation 404. FIG. 4B shows another embodiment by which a sound sampled by another apparatus is received through the network interface 80 in operation 452, and one of stored images is registered in relation to the received sound in operation 454. The sound sampled or received through the registration processes described above is stored in the sound database 100, the image corresponding to the sound is stored in the image database 140, and the mapping information indicating the corresponding relation of each sound and the image is stored and managed in the sound /image mapping database 120. While a sound or an image stored in the database can be used as the sound and image for management, a new sound or a new image can also be used, after being newly registered through the sound input/output unit 10 or the image input/output unit 70. At this time, since the registered sound has a unique frequency range or characteristics, the sound can be distinguished from other sounds and managed. Information on the unique frequency range or characteristics of a registered sound can be separately stored and used in order to detect whether or not sound currently being reproduced includes a registered sound .

FIG. 5 is a flowchart of a method for deleting a sound according to an exemplary embodiment of the present invention.

As shown in FIG. 5, the sound/image mapping unit 40 loads sound/image mapping information from the sound/image mapping database 120 in operation 502, and by deleting the sound/image mapping information of a selected image, can delete the registered sound (operation 504). Sound information can also be permanently deleted from the sound database 100.

FIG. 6 is a flowchart of a method for changing sound information according to an exemplary embodiment of the present invention. Referring to FIG. 6, stored sound/image mapping information is loaded in operation 602, and by changing the sound/image mapping information of the sound corresponding to a selected image, the image corresponding to the registered sound can be changed (operation 604).

As described above, by managing each sound after mapping an image to the sound according to preferred embodiments of the present invention, the sound can be easily managed. For example, a sound included in sound being reproduced can be visually displayed, some sounds displayed can be selectively reproduced or deleted, and the sound of a selected image can be deleted or changed. Accordingly, while listening, the user can conveniently visually identify the sound output information, select a sound not to listen to, or select only one sound to listen to. By doing so, the utilization of the digital AV device can be enhanced.

Meanwhile, the method of managing a sound with an image according to the embodiments of the present invention described above can be implemented as a computer program. Code and code segments forming the program can be easily inferred by programmers in the technology field of the present invention. Also, the program can be stored in computer readable media, and read and executed by a computer to implement the method of the present invention. The computer readable media includes magnetic recording media, optical recording media and carrier wave media.

While the present invention has been particularly shown and described with reference to exemplary embodiments thereof, it will be understood by those of ordinary skill in the art that various changes in form and details may be made therein without departing from the present invention as defined by the following claims. The preferred embodiments should be considered in descriptive sense only and not for purposes of limitation. Therefore, the scope of the invention is defined not by the detailed description of the invention but by the appended claims.

According to preferred embodiments of the present invention as described above, a method of controlling the reproduction of a sound with an image in a digital AV device and an apparatus thereof are provided.

Accordingly, the output sound can be visually managed by handling the sounds separately, and a desired sound can be selectively reproduced or removed, such that utilization of the digital AV device can be enhanced.

## Claims

1. A method for controlling the reproduction of sounds in a digital audio visual (AV) device, the method comprising:
extracting one or more sounds from sound being reproduced through the digital AV device by analyzing frequency characteristics of the sound being produced;
mapping an image to each of the one or more extracted sounds; and
selectively reproducing one or more extracted sounds by using the one or more mapped images.

2. The method of claim 1, wherein in extracting the one or more sounds, the one or more sounds are extracted by using frequency characteristics of one or more sounds sampled beforehand from the sound being reproduced.

3. The method of claim 1 or claim 2, wherein in mapping the one or more images, mapping information in relation to the one or more images representing the one or more extracted sounds is stored in a database.

4. The method of any preceding claim, additionally comprising:
mapping one or more new images to the one or more extracted sounds and registering the one or more new images and the mapping information in a database.

5. The method of any preceding claim, additionally comprising:
displaying one or more images corresponding to the one or more extracted sounds.

6. The method of claim 5, wherein in displaying the one or more images, at least one of the representative image, the type and the current reproduction status of each of the one or more extracted sounds included in the sound is displayed.

7. The method of any preceding claim, wherein the one or more extracted sounds comprise at least two extracted sounds the method comprises:
selectively reproducing part of the at least two extracted sounds.

8. The method of any preceding claim, wherein the one or more extracted sounds comprise at least two extracted sounds and the method comprises:
selectively removing part of the at least two extracted sounds and reproducing the remaining extracted sounds.

9. The method of any preceding claim, wherein the one or more extracted sounds comprise at least two extracted sounds and the method comprises:
selecting and deleting images corresponding to part of the at least two extracted sounds.

10. The method of any preceding claim, wherein the one or more extracted sounds comprise at least two extracted sounds and the method comprises:
changing images corresponding to part of the at least two extracted sounds to another image.

11. A computer readable recording medium having embodied thereon a computer program for executing the method of any preceding claim.

12. An apparatus (1) for controlling the reproduction of sounds in a digital AV device, the apparatus comprising:
an extraction unit (20) which extracts one or more sounds from sound being reproduced through the digital AV device by analyzing frequency characteristics of the sound being reproduced;
a mapping unit (40) which maps an image to each of the one or more extracted sounds; and
a managing unit (30, 50) which enables selective reproduction of the one or more extracted sounds by using the one or more mapped images.

13. The apparatus (1) of claim 12, wherein the extraction unit (20) extracts the one or more extracted sounds by using frequency characteristics of sounds sampled beforehand from the sound being reproduced.

14. The apparatus (1) of claim 12 or claim 13, wherein the mapping unit (40) stores mapping information in relation to the one or more images representing the one or more extracted sounds in a database (120).

15. The apparatus (1) of any of claims 12-14, wherein the managing unit (30, 56) provides at least one of a function of mapping one or more new images to the one or more extracted sounds and registering the one or more new images and the mapping information in a database (120), a function of selectively reproducing part of the one or more extracted sounds when the one or more extracted sounds comprise at least two extracted sounds, a function of selectively removing part of the one or more extracted sounds and reproducing the remaining extracted sounds when the one or more extracted sounds comprise at least two extracted sounds, a function of selecting and deleting an image corresponding to part of the one or more extracted sounds when the one or more extracted sounds comprise at least two extracted sounds, and a function of changing an image corresponding to part of the one or more extracted sounds, into another image.

16. The apparatus (1) of claim 15, wherein the function of displaying displays at least one of the representative image, the type and the current reproduction status of each of the one or more extracted sounds.

## Patentansprüche

1. Verfahren zur Steuerung der Wiedergabe von Klängen in einem digitalen audiovisuellen (AV-) Gerät, wobei das Verfahren Folgendes umfasst:
Extrahieren eines oder mehrerer Klänge aus einem durch das digitale AV-Gerät wiedergegebenen Klang durch Analysieren von Frequenzcharakteristiken des wiedergegebenen Klangs;
Zuordnen eines Bildes zu jedem des einen oder der mehreren extrahierten Klänge; und
selektives Wiedergeben eines oder mehrerer extrahierter Klänge mittels des einen oder der mehreren zugeordneten Bilder.

2. Verfahren nach Anspruch 1, wobei beim Extrahieren des einen oder der mehreren Klänge der eine oder die mehreren Klänge extrahiert werden durch Verwendung von Frequenzcharakteristiken des einen oder der mehreren Klänge, die zuvor aus dem wiedergegebenen Klang abgetastet wurden.

3. Verfahren nach Anspruch 1 oder 2, wobei beim Zuordnen des einen oder der mehreren Bilder Zuordnungsinformationen in Bezug auf das eine oder die mehreren Bilder, welche den einen oder die mehreren extrahierten Klänge repräsentieren, in einer Datenbank gespeichert werden.

4. Verfahren nach einem vorhergehenden Anspruch, das das außerdem Folgendes umfasst:
Zuordnen eines oder mehrerer neuer Bilder zu dem einen oder den mehreren extrahierten Klängen sowie Registrieren des einen oder der mehreren neuen Bilder und der Zuordnungsinformationen in einer Datenbank.

5. Verfahren nach einem vorhergehenden Anspruch, das außerdem Folgendes umfasst:
Anzeigen eines oder mehrerer Bilder, die dem einen oder den mehreren extrahierten Klängen entsprechen.

6. Verfahren nach Anspruch 5, wobei bei dem Anzeigen des einen oder der mehreren Bilder das repräsentative Bild, die Art und/oder der aktuelle Wiedergabestatus jedes des einen oder der mehreren extrahierten Klänge, die in dem Klang enthalten sind, angezeigt wird.

7. Verfahren nach einem vorhergehenden Anspruch, wobei der eine oder die mehreren extrahierten Klänge mindestens zwei extrahierte Klänge umfassen und das Verfahren Folgendes umfasst:
selektives Wiedergeben eines Teils der mindestens zwei extrahierten Klänge.

8. Verfahren nach einem vorhergehenden Anspruch, wobei der eine oder die mehreren extrahierten Klänge mindestens zwei extrahierte Klänge umfassen und das Verfahren Folgendes umfasst:
selektives Beseitigen eines Teils der mindestens zwei extrahierten Klänge und Wiedergeben der verbleibenden extrahierten Klänge.

9. Verfahren nach einem vorhergehenden Anspruch, wobei der eine oder die mehreren extrahierten Klänge mindestens zwei extrahierte Klänge umfassen und das Verfahren Folgendes umfasst:
Auswählen und Löschen von Bildern, die einem Teil der mindestens zwei extrahierten Klänge entsprechen.

10. Verfahren nach einem vorhergehenden Anspruch, wobei der eine oder die mehreren extrahierten Klänge mindestens zwei extrahierte Klänge umfassen und das Verfahren Folgendes umfasst:
Verändern von Bildern, die einem Teil der mindestens zwei extrahierten Klänge entsprechen, zu einem anderen Bild.

11. Computerlesbares Aufzeichnungsmedium mit einem darauf verkörperten Computerprogramm zum Ausführen des Verfahrens nach einem vorhergehenden Anspruch.

12. Vorrichtung (1) zur Steuerung der Wiedergabe von Klängen in einem digitalen AV-Gerät, wobei die Vorrichtung Folgendes umfasst:
eine Extraktionseinheit (20), die aus Klang, der durch das digitale AV-Gerät wiedergegeben wird, durch Analysieren von Frequenzcharakteristiken des wiedergegebenen Klangs einen oder mehrere Klänge extrahiert;
eine Zuordnungseinheit (40), die jedem des einen oder der mehreren extrahierten Klänge ein Bild zuordnet; und
eine Verwaltungseinheit (30, 50), die mittels des einen oder der mehreren zugeordneten Bilder eine selektive Wiedergabe des einen oder der mehreren extrahierten Klänge ermöglicht.

13. Vorrichtung (1) nach Anspruch 12, wobei die Extraktionseinheit (20) den einen oder die mehreren extrahierten Klänge mittels von zuvor von dem wiedergegebenen Klang abgetasteten Frequenzcharakteristiken von Klängen extrahiert.

14. Vorrichtung (1) nach Anspruch 12 oder 13, wobei die Zuordnungseinheit (40) Zuordnungsinformationen in Bezug auf das eine oder auf die mehreren Bilder, die den einen oder die mehreren extrahierten Klänge repräsentieren, in einer Datenbank (120) speichert.

15. Vorrichtung (1) nach einem der Ansprüche 12 - 14, wobei die Verwaltungseinheit (30, 50) mindestens eine der folgenden liefert: eine Funktion des Zuordnens eines oder mehrerer neuer Bilder zu dem einen oder den mehreren extrahierten Klängen und Registrieren des einen oder der mehreren neuen Bilder sowie der Zuordnungsinformationen in einer Datenbank (120), eine Funktion des selektiven Wiedergebens eines Teils des einen oder der mehreren extrahierten Klänge, wenn der eine oder die mehreren extrahierten Klänge mindestens zwei extrahierte Klänge umfassen, eine Funktion des selektiven Beseitigens eines Teils des einen oder der mehreren extrahierten Klänge und Wiedergeben der verbleibenden extrahierten Klänge, wenn der eine oder die mehreren extrahierten Klänge mindestens zwei extrahierte Klänge umfassen, eine Funktion des Auswählens und Löschens eines Bildes, das einem Teil des einen oder der mehreren extrahierten Klänge entspricht, wenn der eine oder die mehreren extrahierten Klänge mindestens zwei extrahierte Klänge umfassen, und eine Funktion des Veränderns eines Bildes, das einem Teil des einen oder der mehreren extrahierten Klänge entspricht, zu einem anderen Bild.

16. Vorrichtung (1) nach Anspruch 15, wobei die Funktion des Anzeigens das repräsentative Bild, die Art und/oder den aktuellen Wiedergabestatus jedes des einen oder der mehreren extrahierten Klänge anzeigt.

## Revendications

1. Procédé pour commander la reproduction de sons dans un dispositif audiovisuel (AV) numérique, lequel procédé consiste à :
- extraire un ou plusieurs sons de son reproduit par le biais du dispositif AV numérique en analysant les caractéristiques de fréquence du son reproduit ;
- cartographier une image sur chacun du ou des sons extraits ; et
- reproduire sélectivement un ou plusieurs sons extraits en utilisant la ou les images cartographiées.

2. Procédé selon la revendication 1, dans lequel, lors de l'extraction du ou des sons, le ou les sons sont extraits en utilisant des caractéristiques de fréquence du ou des sons échantillonnées au préalable à partir du son reproduit.

3. Procédé selon la revendication 1 ou la revendication 2, dans lequel, lors de la cartographie de la ou des images, des informations de cartographie concernant la ou les images représentant le ou les sons extraits sont stockées dans une base de données.

4. Procédé selon l'une quelconque des revendications précédentes, consistant en outre à cartographier une ou des nouvelles images vers le ou les sons extraits et à enregistrer la ou les nouvelles images et les informations de cartographie dans une base de données.

5. Procédé selon l'une quelconque des revendications précédentes, consistant en outre à afficher la ou les images correspondant auxdits un ou plusieurs sons extraits.

6. Procédé selon la revendication 5, dans lequel, lors de l'affichage de la ou des images, l'un au moins d'une image représentative, du type et du statut de reproduction courant de chacun du ou des sons extraits compris dans le son est affiché.

7. Procédé selon l'une quelconque des revendications précédentes, dans lequel le ou les sons extraits comprennent au moins deux sons extraits, le procédé consistant à reproduire sélectivement une partie desdits au moins deux sons extraits.

8. Procédé selon l'une quelconque des revendications précédentes, dans lequel le ou les sons extraits comprennent au moins deux sons extraits, le procédé consistant à retirer sélectivement une partie desdits au moins deux sons extraits et à reproduire les sons extraits restants.

9. Procédé selon l'une quelconque des revendications précédentes, dans lequel le ou les sons extraits comprennent au moins deux sons extraits, le procédé consistant à choisir et effacer des images correspondant à une partie desdits au moins deux sons extraits.

10. Procédé selon l'une quelconque des revendications précédentes, dans lequel le ou les sons extraits comprennent au moins deux sons extraits, le procédé consistant à changer les images correspondant à une partie desdits au moins deux sons extraits en une autre image.

11. Support d'enregistrement lisible par ordinateur dans lequel est stocké un programme informatique pour exécuter le procédé selon l'une quelconque des revendications précédentes.

12. Appareil (1) pour commander la reproduction de sons dans un dispositif AV numérique, lequel appareil comprend :
- une unité d'extraction (20) qui extrait un ou plusieurs sons de son reproduit par le biais du dispositif AV numérique en analysant les caractéristiques de fréquence du son reproduit ;
- une unité de cartographie (40) pour cartographier une image sur chacun du ou des sons extraits ; et
- une unité de gestion (30, 50) qui permet de reproduire sélectivement le ou les sons extraits en utilisant la ou les images cartographiées.

13. Appareil (1) selon la revendication 12, dans lequel l'unité d'extraction (20) extrait le ou les sons extraits en utilisant les caractéristiques de fréquence de sons échantillonnées au préalable à partir du son reproduit.

14. Appareil (1) selon la revendication 12 ou la revendication 13, dans lequel l'unité de cartographie (40) stocke des informations de cartographie concernant la ou les images représentant le ou les sons extraits dans une base de données (120).

15. Appareil (1) selon l'une quelconque des revendications 12-14, dans lequel l'unité de gestion (30, 50) assure l'une au moins d'une fonction de cartographie d'une ou d'images nouvelles vers le ou les sons extraits et d'enregistrement de la ou des nouvelles images et des informations de cartographie dans une base de données (120), d'une fonction de reproduction sélective d'une partie du ou des sons extraits lorsque le ou les sons extraits comprennent au moins deux sons extraits, d'une fonction de retrait sélectif d'une partie du ou des sons extraits et de reproduction des sons extraits restants lorsque le ou les sons extraits comprennent au moins deux sons extraits, d'une fonction de sélection et d'effacement d'une image correspondant à une partie du ou des sons extraits lorsque le ou les sons extraits comprennent au moins deux sons extraits, et d'une fonction de changement d'une image correspondant à une partie du ou des sons extraits en une autre image.

16. Appareil (1) selon la revendication 15, dans lequel la fonction d'affichage affiche l'un au moins d'une image représentative, du type et du statut de reproduction courant de chacun du ou des sons extraits.
